## Europäisches Patentamt
## European Patent Office
## Office européen des brevets

(11) Veröffentlichungsnummer : **0 409 178 B1**

(12) **EUROPÄISCHE PATENTSCHRIFT**

(45) Veröffentlichungstag der Patentschrift :
**08.02.95 Patentblatt 95/06**

(51) Int. Cl.⁶ : **G01P 5/16**, G01P 5/165

(21) Anmeldenummer : **90113696.0**

(22) Anmeldetag : **17.07.90**

(54) **Sonde und Verfahren zum Messen der Relativgeschwindigkeit einer transsonisch oder mit Ultraschall anströmenden Luft- oder Gasströmung.**

(30) Priorität : **18.07.89 DE 3923753**

(43) Veröffentlichungstag der Anmeldung :
**23.01.91 Patentblatt 91/04**

(45) Bekanntmachung des Hinweises auf die
Patenterteilung :
**08.02.95 Patentblatt 95/06**

(84) Benannte Vertragsstaaten :
**DE ES FR GB IT NL**

(56) Entgegenhaltungen :
**DE-C- 312 500
DE-C- 339 996
PATENT ABSTRACTS OF JAPAN vol. 7, no.
109 (P-196)(1254) 12 Mai 1983, & JP-A-58 30673**

(73) Patentinhaber : **NORD-MICRO, ELEKTRONIK
FEINMECHANIK AG
Victor-Slotosch-Strasse 20
D-60388 Frankfurt (DE)**

(72) Erfinder : **Köhler, Heinz-Gerhard, Dipl.-Phys.
Pfarrgasse 13 a
D-6369 Schönede 1 (DE)**

(74) Vertreter : **Seibert, Hannelore
Seibert + Michelis,
Rechtsanwälte und Patentanwälte,
Tattenbachstrasse 9
D-80538 München (DE)**

**Beschreibung**

Die Erfindung bezieht sich auf eine Verfahren zur Messung der Relativgeschwindigkeit eines anströmenden Mediums, gemäß Patentanspruch 1 sowie auf Vorrichtungen zur Durchführung der Verfahrens gemäß den Patentansprüchen 3 und 5.

Eine bekannte Sonde ist in der deutschen Patentschrift DE-C-0 312 500 beschrieben. Diese Sonde weist einen Kopf, dessen Außendurchmesser größer als der des Sondenschafts ist, auf. Drucköffnung und Saugöffnung sind auf entgegengesetzten Seiten des Sondenkopfes angebracht und münden in zwei konzentrische Rohre. Als Anwendungsbeispiel sind in dieser Schrift Schiffsgeschwindigkeitsmesser angegeben. Dementsprechend ist die Aufgabe der pilzförmigen Ausbildung der Sonde im wesentlichen die Vermeidung von Wirbeln im Bereich der Saugöffnung.

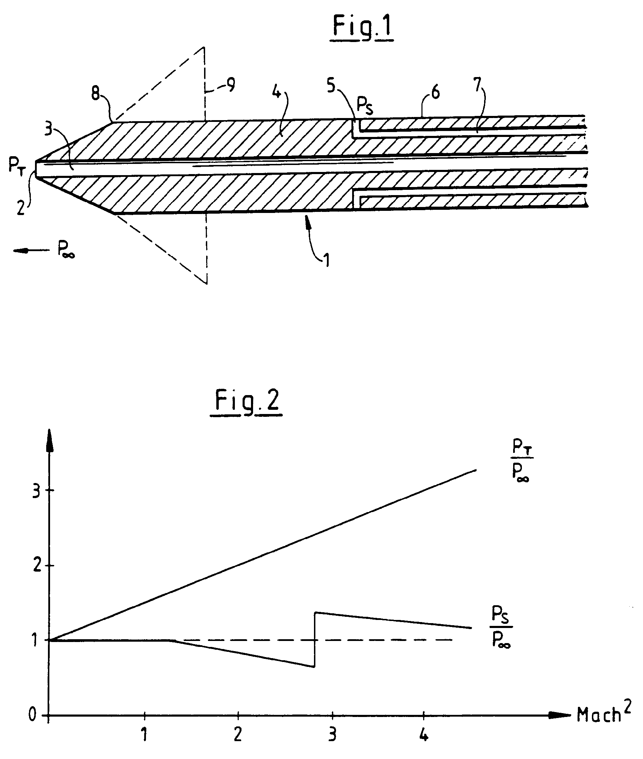

Weitere bekannte Meß-Sonden nebst zugehörigen Meß-Verfahren werden unter dem Namen Prandtl'sches Staurohr insbesondere in der Luftfahrttechnik zur Messung der Geschwindigkeit von Luftfahrzeugen verwendet. Das bekannte Meßprinzip sowie sein durch die Erfindung zu überwindender Nachteil werden anhand der Figuren 1 und 2 erläutert.

Das in Fig.1 dargestellte herkömmliche Staurohr, welches z.B. an einem Luftfahrzeug befestigt werden kann, wird an seinem aus aerodynamischen Gründen düsenförmig zugespitzten Vorderende 2, in der Figur also von links, angeströmt. Eine solche Anströmung kann insbesondere durch eine entsprechende Bewegung der Sonde in dem Medium (z.B. Luft, Wasser), in der Figur also von rechts nach links, zustandekommen.

Die Sonde hat einen rohrförmigen Körper 1, an dessen Vorderende 2 ein axialer, durch die Rohrinnenwand begrenzter Hohlraum 3 nach außen mündet. Im Hohlraum 3 baut sich infolge der Anströmung durch das fluidische Medium ein Totaldruck $P_T$ auf, der sich additiv zusammensetzt aus dem statischen Druck $P_S$ des Mediums und einem geschwindigkeitsabhängigen (kinetischen) Druck $Q_C$ (Staudruck). Dieser kann am hinteren Ende der Sonde mit einer nicht näher dargestellten Meßeinrichtung erfaßt werden.

In der Wandung 4 des Sonderkörpers 1 verläuft getrennt vom axialen Hohlraum 3 und mit Abstand vom Vorderende 2 mindestens ein Radialkanal 5 radial (oder zumindest mit radialer Richtungskomponente) und mündet in der Mantelfläche 6 des Sonderkörpers 1 nach außen. Im Radialkanal 5 herrscht der statische Druck $P_S$ des Mediums, welcher über einen z.B. in der Wandung 4 parallel zum axialen Hohlraum 3 verlaufenden Verlängerungskanal 7 am hinteren Ende der Sonde erfaßt werden kann.

Durch Differenzbildung $P_T$ minus $P_S$ läßt sich der geschwindigkeitsabhängige Staudruck $Q_C$ and aus diesem die zugehörige Relativgeschwindigkeit ermitteln. Innerhalb bestimmter Geschwindigkeitsgrenzen gilt z.B. die Beziehung $Q_C = \rho v^2/2$, mit $\rho$ = Dichte des Mediums und $v$ = Relativgeschwindigkeit.

Bei der bekannten Sonde besteht nun das Problem, daß sich im transsonischen Anströmungsbereich (z.B. bei Ultraschallgeschwindigkeit eines Flugzeugs) hinter der Schulter 8 des düsenförmigen Vorderteils ein gestrichelt angedeuteter Expansionsfächer mit einer stationären Stoßwelle 9 (Rekompressionsstoß) - einer Zone unstetigen, sprunghaften Druckverlaufs - aufbaut. (Eine zweite Zone unstetigen Druckverlaufs [Bugwelle] baut sich vor dem Vorderende 2 der Sonde auf, spielt für die folgenden Ueberlegungen jedoch keine Rolle.)

Mit steigender Geschwindigkeit (steigender Mach-Zahl) wandert die Stoßwelle 9 an der Meßsonde entlang nach hinten und passiert bei einer bestimmten Geschwindigkeit die Austrittsöffnung(en) des mindestens einen Radialkanals 5. Der dort herrschende und gemessene Druck verändert sich dadurch sprunghaft, und es entsteht ein nicht kompensierbarer, unstetiger Meßfehler.

Dieser Effekt ist in Figur 2 veranschaulicht, in der die Drücke $P_T$ und $P_S$ - normiert auf einen ungestörten, theoretisch unendlich fern von der Sonde gemessenen Druck $P_\infty$ - als Kennlinien über der Geschwindigkeit aufgetragen sind, und zwar der Einfachheit halber über dem Quadrat der Geschwindigkeit, da der in den Totaldruck $P_T$ eingehende Staudruck $Q_C$ auf diese Weise annähernd linear über der Abszisse verläuft.

Die untere Kennlinie der Fig.2 zeigt ein Beispiel, bei dem die Stoßwelle 9 bei einer Geschwindigkeit von ca. 1,7 Mach (entsprechend einem Geschwindigkeitsquadrat von ca. 2,9 Mach²) die Austrittsößffnung(en) des mindestens einen Radialkanals 5 passiert und dort die besagte Druckunstetigkeit hervorruft.

Um für die Messung von Ueberschallgeschwindigkeiten tauglich zu sein, muß bei den bekannten Meßsonden daher eine Baulänge hingenommen werden, die einen genügenden Abstand des Radialkanals 5 von der Sonderschulter 8 gewährleistet. Je höher die zu messende Geschwindigkeit ist, desto länger muß die Sonde sein. Dies ist mit einem technisch und wirtschaftlich unerwünschten Aufwand verbunden.

Der Erfindung liegt daher die Aufgabe zu Grunde, eine Sonde und ein Verfahren bereitzustellen, die eine zuverlässige Messung von Ueberschallgeschwindigkeiten von der Baulänge der Sonde unabhängig machen.

Diese Aufgabe wird durch das erfindungsgemäße Verfahren nach Anpruch 1 sowie die erfindungsgemäßen Sonden nach Ansprüchen 3 und 5 gelöst.

Anstelle des statischen Drucks wird der Leedruck $P_L$ hinter einer geeignet geformten Stufe gemessen, die sich vorzugsweise an der dicksten Stelle der Meßsonde befindet. Aus dem Leedruck $P_L$ und dem Totaldruck

2

(Pitotdruck) $P_T$ werden dann der statische Druck $P_S$ und der Staudruck $Q_C$ berechnet.

Dabei wird von der Tatsache Gebrauch gemacht, daß sich hinter einer stufenförmigen Schulter ein strömungsberuhigter Bereich ausbildet (das sogenannte Totwasser), der eine definierte, stationäre Druckverteilung aufweist.

Insbesondere unmittelbar hinter der Stufe kann ein stationärer, geschwindigkeitsabhängiger Leedruck $P_L$ gemessen werden, der dem um einen Soganteil verringerten statischen Druck $P_S$ entspricht, etwa nach der Beziehung

$$P_L = P_S + c_L \cdot Q_c, \ c_L < 0.$$

Der wesentliche Vorteil der erfindungsgemäßen Anordnung liegt nun darin, daß die oben erläuterte Stoßwelle (der Rekompressionsstoß) sich beim Erreichen der Schallgeschwindigkeit hinter dem Totwasserbereich ausbildet. Dadurch bleibt der Leedruck selbst, der nahe hinter der Stufe erfaßt wird, von dieser Stoßwelle unbeeinflußt. Das Wandern der Stoßwelle nach hinter mit zunehmender Geschwindigkeit ist daher für die Messung mit einer erfindungsgemäßen Sonde unschädlich. Eine stetige Messung wird somit im gesamten Geschwindigkeitsbereich, also auch bei höchsten Geschwindigkeiten (z.B. Mach 4,0), ohne Verlängerung der Sonde erzielt. Dies ist der Hauptvorteil gegenüber herkömmlichen, auf dem Prandtl'schen Meßprinzip beruhenden Sonden.

Wenn der Leedruck $P_L$ anstatt von einem oder einigen wenigen Radialkanälen von einem Ringschlitz aufgenommen und zur Auswertung gebracht wird, wird vorteilhaft eine Mittelung des Leedrucks über den Umfang der Sonde bewirkt, wodurch eine gewisse Unabhängigkeit des Leedrucks und somit der Meßanordnung vom Anströmwinkel des Mediums erreicht wird.

Um nicht nur eine Winkelunabhängigkeit gegenüber leicht schrägen Anströmungen zu erreichen, sondern auch die Winkelabhängigkeit bei Anströmung unter hohen Anströmwinkeln kompensieren zu können, kann die Meßanordnung durch zusätzliche Druckmeßbohrungen und zugehörige Druckleitungen erweitert werden. So können durch Messung zweier Druckdifferenzen zwei Winkelkomponenten der Anströmung bestimmt werden. Die erfindungsgemäße Leedruckmessung kann somit vorteilhaft mit bekannten Methoden der Winkelmessung kombiniert werden.

Als Vorteil in diesem Zusammenhang ist hervorzuheben, daß die Leedruckmessung unbeschadet der Form der Winkelmessung funktioniert, d.h. unabhängig davon, ob letztere etwa mit kegel-, ogive-, paraboloid- oder halbkugelförmigen Sondenköpfen durchgeführt wird.

Die Erfindung ist indes nicht auf rotationssymmetrische Formen des Sondenkopfes beschränkt, sondern funktioniert auch bei polyedrisch begrenzten Sondenköpfen, die z.B. die Form einer regelmäßigen Pyramide haben.

Ueberdies ist das beschriebene Prinzip der Leedruckmessung unabhängig von der Anzahl und einer Symmetrie der Druckmeßbohrungen auf dem Sondenkopf.

Das Hauptziel, die Ablösung der herkömmlichen Messung des statischen Drucks (mit den genannten Problemen im Ueberschallbereich) durch die Messung eines geeigneten Leedrucks, kann mit verschieden geformten Sondenköpfen erreicht werden und ist prinzipiell unabhängig davon, wieviele Signale zusätzlich noch ausgewertet werden, insbesondere unabhängig davon, wieviele Winkelkomponenten zusätzlich mit zur Auswertung oder Kompensation herangezogen werden.

Unterschiedliche Sogcharakteristiken des Leedruckes $P_L$ über der Machzahl lassen sich durch unterschiedliche Längsquerschnitts-Formen des Sondenkopfes erzielen. Insbesondere läßt sich die Sogcharakteristik durch unterschiedliche Neighungen und/oder Krümmungen der Rückseite des Sondenkopfes (Stufenform) günstig beeinflussen. Auch für den Ort der Druckmessung hinter der Stufe sind verschiedene Möglichkeiten gegeben.

Anhand von in der Zeichnung dargestellten Ausführungsbeispielen wird die Erfindung nachstehend näher erläutert. Es zeigt

Fig.1      eine herkömmliche Meßsonde;

Fig.2      Kennlinien einer herkömmlichen Meßsonde;

Fig.3      eine erfindungsgemäße Meßsonde;

Fig.4      Kennlinien einer erfindungsgemäßen Meßsonde;

Fig.5      Varianten der Querschnittsgrundform erfindungsgemäßer Sondenköpfe;

Fig.6      Varianten der Symmetrie erfindungsgemäßer Sondenköpfe;

Fig.7      Ausgestaltungsvarianten der Rückseiten erfindungsgemäßer Sondenköpfe;

Fig.8      eine weitere erfindungsgemäße Meßsonde zur zusätzlichen Erfassung der Anströmwinkel; und

Fig.9      eine schematische Darstellung des Druckverlaufs hinter einer rechteckigen Schulterstufe.

Auf die Figuren 1 und 2 wurden bereits bei der Erörterung des Standes der Technik in der Beschreibungseinleitung Bezug genommen. In allen Figuren sind für gleiche Teile gleiche Bezugzeichen verwendet.

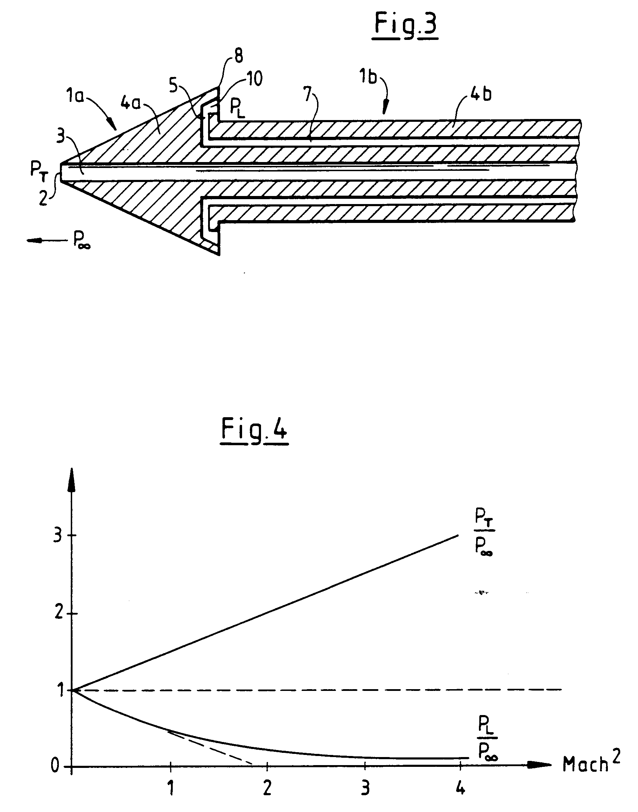

Die in Fig.3 dargestellte Meßsonde besteht erfindungsgemäß aus einem dem Vorderende 2 zugeordneten, stromlinienförmigen Sondenkopf 1a und dem durch den restlichen Sondenkörper gebildeten Sondenschaft 1b, wobei der größte Durchmesser des Sondenkopfs 1a (an der Schulter 8) größer als der Außendurchmesser des Sondenschafts 1b ist.

Mindestens ein Radialkanal 5 verläuft radial (oder zumindest mit radialer Richtungskomponente) in der Wandung 4a des Sondenkopfs 1a und mündet aus dessen Rück- oder Lee-Seite mittels eines Axialkanals 10 axial (oder zumindest mit axialer Richtungskomponente) nach außen. Ein in der Wandung 4b des Sondenschafts 1b getrennt vom axialen Hohlraum 3 verlaufender Verlängerungskanal 7 gestattet, den im Radialkanal 5 herrschenden (Lee-)Druck $P_L$ am hinteren Ende der Sonde mittels einer nicht näher dargestellten Einrichtung zu erfassen und auszuwerten. Diese Auswertungseinrichtung erfaßt auch den sich im axialen Hohlraum 3 aufbauenden Totaldruck $P_T$.

In dieser Konstellation tritt der kinetische Druck $Q_C$ als Sog auf. Für den Leedruck $P_L$ gilt deshalb die Beziehung

$$P_L \ = \ P_S \ + \ c_L \cdot Q_C, \ c_L < 0,$$

wobei $P_S$ wieder den statischen Mediumsdruck bezeichnet.

Für den Totaldruck $P_T$ gilt wieder die Definition

$$P_T \ = \ P_S \ + \ Q_C.$$

Für die Diskussion der Meßsonde wählen wir speziell $c_L = -1$. Durch Verknüpfung der beiden vorgenannten Gleichungen erhält man dann die Aussagen

$$P_T \ + \ P_L \ = \ 2\,P_S$$

und

$$P_T \ - \ P_L \ = \ 2\,Q_C.$$

Die letztgenannte Gleichung zeigt nicht nur, daß man aus der Differenz des Totaldrucks $P_T$ und des Leedrucks $P_L$ den geschwindigkeitsanzeigenden kinetischen Druck $Q_C$ ermitteln kann, sondern auch, daß die genannte Differenz bei gegebener Geschwindigkeit ein gegenüber der herkömmlichen Messung verdoppeltes Meßsignal liefert. Die Meßempfindlichkeit ist mithin doppelt so hoch.

Der Hauptvorteil ist jedoch darin zu sehen, daß der Leedruck $P_L$ im gesamten Geschwindigkeitsbereich stetig verläuft, da die Austrittsöffnung des mindestens einen Radialkanals 5 auf der Leeseite des Sondenkopfs 1a keiner Stoßwelle mehr ausgesetzt ist. Letztere bildet sich im Ueberschallbereich hinter der Schulter 8 des Sondenkopfs 1a und wandert von dort mit zunehmender Geschwindigkeit nach hinten, bleibt für die Messung des Leedrucks $P_L$ somit unschädlich.

Der in diesem Fall stetige Kennlinienverlauf ist in Fig.4 graphisch wiedergegeben.

Von der schützenden Wirkung des überstehenden Sondenkopfs 1a kann ein Radialkanal 5 auch dann noch profitieren, wenn er in der Wandung 4a des Sondenschafts 1b verläuft und unmittelbar an der Rückseite des Sondenkopfs 1a aus dem Sondenschaft 1b nach außen mündet. Auch dann wird der Leedruck $P_L$ stetig verlaufen. Der Sog des kinetischen Drucks $Q_C$ wirkt sich in diesem Fall aber nur teilweise aus, so daß die oben im Zusammenhang mit Fig.3 beschriebene Erhöhung der Meßempfindlichkeit hier geringer ausfällt.

Münden mehrere Radialkanäle 5 am Umfang des Sondenkopfs 1a bzw. Sondenschafts 1b verteilt nach außen, läßt sich durch pneumatische Mittelung ihrer erfaßten Drücke $P_L$ die Meßsicherheit in jedem Fall noch weiter steigern.

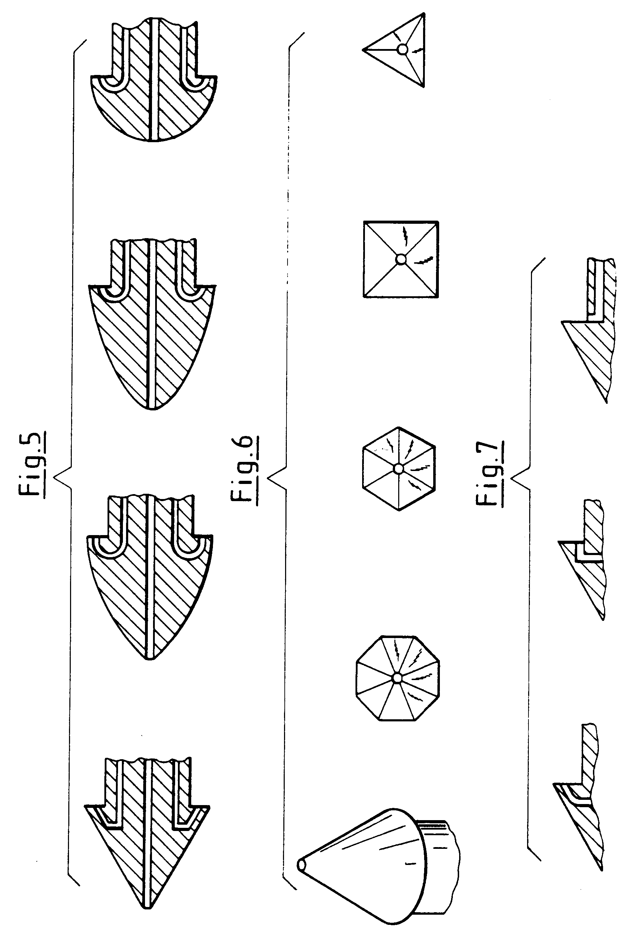

Eventuelle Veränderungen des Strömungsfeldes (etwa Verwirbelungen) an der Schulter 8 des Sondenkopfes 1a werden von vornherein so gering wie möglich gehalten durch die Maßnahme, den Sondenkopf 1a rotationssymmetrisch, insbesondere konisch, ogivisch, parabolisch oder halbkugelig, auszubilden (siehe Fig.5). Die Erfindung ist indes nicht auf derartige Formen des Sondenkopfes 1a beschränkt, sondern funktioniert auch bei polyedrisch begrenzten Sondenköpfen, die z.B. die Form einer regelmäßigen Pyramide haben (siehe Fig.6).

Unterschiedliche Sogcharakteristiken $P_L$ der Austrittsöffnung(en) des mindestens einen Radialkanals 5 und damit unterschiedliche Meßempfindlichkeiten der Sonde lassen sich durch unterschiedliche Neigungen und/oder Krümmungen der Rückseite des Sondenkopfes erzielen (siehe Fig.7).

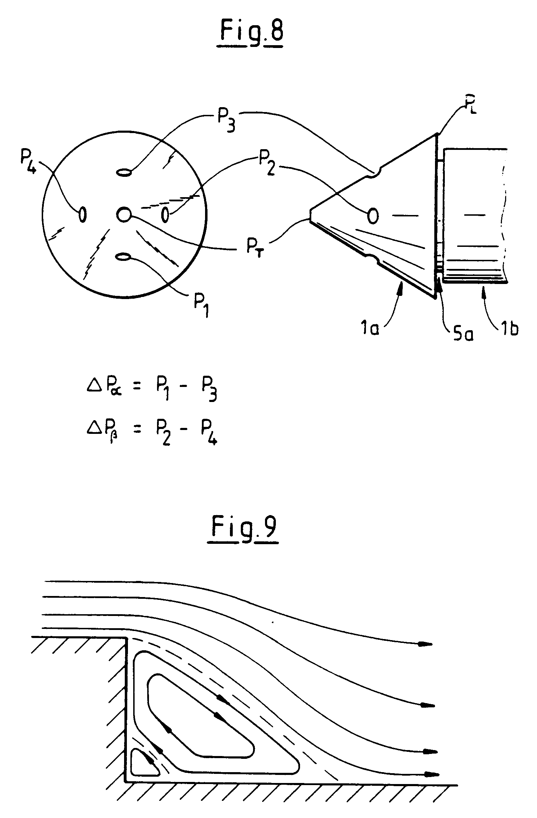

Mit zwei in der Wandung 4a des Sondenkopfs 1a verlaufenden und in Umfangsrichtung beabstandeten Meßbohrungen, die an der Vorderseite des Sondenkopfs 1a dezentral, aber vorzugsweise symmetrisch zur Sondenlängsaches, nach außen führen, wie in Fig.8 gezeigt, läßt sich z.B. eine Druckdifferenz $P_1$ minus $P_3$ messen, die proportional zu einer Winkelkomponente $\alpha$ der Anströmung ist und eine Aussage darüber ermöglicht, unter welchem Winkel $\alpha$ gegenüber der Sondenlängsachse innerhalb einer durch die zwei Meßbohrungen und die Sondenlängsaches festgelegten Ebene das Medium die Sonde anströmt.

Das Vorsehen weiterer derartiger Meßbohrungen, die in der Draufsicht auf die Sondenspritze um einen Winkel gegenüber dem genannten Meßbohrungspaar versetzt sind, wie beispielsweise in Fig.8 gezeigt, dient wiederum der Erhöhung der Meßsicherheit und -genauigkeit, insbesondere bei der Erfassung großer Anströmwinkel, und erlaubt die Erfassung einer zweiten Winkelkomponente $\beta$ der Anströmung, d.h. deren vollständige räumliche Richtungsbeschreibung relativ zur Sondenlängsachse. Die zweite Winkelkomponente β liegt vorzugsweise in einer Ebene, die orthogonal zu der durch die beiden erstgenannten Meßbohrungen festgelegten Ebene verläuft. Entsprechend beträgt der Winkelversatz eines zweiten Meßbohrungspaares gegenüber dem erstgenannten Meßbohrungspaar in der Draufsicht auf die Sondenspitze vorzugsweise 90 Grad, wie in Fig.8 veranschaulicht.

Fig.8 zeigt ferner eine stufenförmige Schulter, d.h. einen stufenförmigen Uebergang vom Sondenkopf 1a zum Sondenschaft 1b, in rotationssymmetrischer Ausbildung über dem gesamten Umfang der Sonde und einen ebenfalls über den Umfang der Sonde ausgebildeten Ringschlitz 5a. Wird der Leedruck $P_L$ anstatt von einem oder einigen wenigen Radialkanälen 5 von einem solchen Ringschlitz 5a aufgenommen und zur Auswertung gebracht, wird vorteilhaft eine Mittelung des Leedrucks über den Umfang der Sonde bewirkt, wodurch eine gewisse Unabhängigkeit des Leedrucks und somit der Meßanordnung vom Anströmwinkel des Mediums erreicht wird. Der Ringschlitz 5a kann seine Druckwerte über einen Radialkanal oder eine sonstige Leitung einer Auswerte-Einheit zuführen.

Zur Erläuterung der Leedruckmessung ist in Fig.9 abschliessend der Strömungsverlauf hinter einer rechteckigen Schulterstufe dargestellt. Der Leedruck kann an einer Stelle im Bereich der geschlossenen Rückströmung erfaßt (entnommen) werden.


**Patentansprüche**

1. Verfahren zur Messung der Relativgeschwindigkeit einer eine stromlinienförmige Sonde transsonisch oder mit überschall anströmenden Luft- oder Gasströmung, bei dem der am Vorderende (2) der Sonde auftretende Gesamtdruck ($P_T$) über ein axiales, in der Sonde verlaufendes Staurohr erfasst wird, der die Summe des statischen Druckes ($P_S$) des Mediums und seines Geschwindigkeitabhängigen Staudruckes ($Q_c$) repräsentiert und bei dem mittels mindestens eines, vom Staurohr (3) getrennten Radial-Kanals (5) ein zweiter Meßwert ($P_L$) oder eine Mehrzahl zweiter Meßwerte erfasst wird, die die Aufspaltung des Gesamtdruckes ($P_T$) gestatten, bei dem der zweite Meßwert ($P_L$) an der Rückseite eines dem Vorderende der Sonde zugeordneten Sondenkopfes (1a) erfasst wird, dessen größter Durchmesser größer als der Außendurchmesser des durch den restlichen Sondenkörper gebildeten Sondenschaftes (1b) ist, wobei der zweite Meßwert ($P_L$) die Differenz des statischen Druckes ($P_S$) und eines geschwindigkeitsabhängigen Staudruckanteiles ($C_L \times Q_c$) der Luft oder des Gases repräsentiert.

2. Verfahren nach Anspruch 1, dadurch gekennzeichnet, daß mindestens zwei weitere Druckmeßwerte ($P_1$;$P_3$) am in Umfangsrichtung beabstandeten Stellen auf der Vorderseite des Sondenkopfes (la) zum Messen mindestens einen Meßwinkel der Anströmung erfasst werden.

3. Sonde zur Durchführung des Verfahrens nach Anspruch 1, mit einem am Vorderende (2) des Sondenkörpers (1) angeordneten stromlinienförmigen Sondenkopf (1a) und einem sich daran strömungsabwärts stufenförmig anschließenden und einen geringeren Durchmesser als den des Sondenkopfes (1a) aufweisenden Sondenschaft (1b), sowie mit einem im Sondenkopf (1a) endenden Staurohr (3) sowie einem auf der Rückseite des Sondenkopfes (1b) ausmündenden Saugkanal, der aus mindestens einem diskreten, im Sondenkopf (1a) geführten Radial-Kanal (5) besteht und mittels eines anschließenden Axial-Kanals (10) auf der Rückseite (8) des Sondenkopfes (la) nach außen mündet.

4. Sonde nach Anspruch 3, dadurch gekennzeichnet, daß mehrere Radial- bzw. Axial-Kanäle (5; 10) in gleichmäßigen Abständen voneinander auf der Rückseite (8) des Sondenkopfes (1a) ausmünden.

5. Sonde zur Durchführung des Verfahrens nach Anspruch 1 mit einem am Vorderende (2) des Sondenkörpers (1) angeordneten, stromlinienförmigen Sondenkopf (1a) und einem sich daran strömungsabwärts stufenförmig anschließenden und einen geringeren Durchmesser als den des Sondenkopfes (1a) aufweisenden Sondenschaft (1b) sowie mit einem im Sondenkopf (la) endenden Staurohr (3) sowie einem auf der Rückseite des Sondenkopfes (1a) ausmündenden Saugkanal, der durch einen am Umfang des Sondenschaftes (1b) unmittelbar hinter dem Sondenkopf (1a) eingeschnittenen Ringschlitz (5a) gebildet ist, in den mindestens ein Meßkanal (7) mündet.

6. Sonde nach einem der Ansprüche 3 bis 5, dadurch gekennzeichnet, daß auf der Anströmseite des Sondenkopfes (1a) mindestens zwei, insbesondere vier, in der Wandung (4a) des Sondenkopfes (1a) verlaufende und in Umfangsrichtung voneinander beabstandete Meßbohrungen ($P_1$, $P_3$; $P_2$, $P_4$) ausmünden.

## Claims

1. Method for measuring the relative speed of an air or gas flow of transsonic or supersonic speed flowing against a streamlined sensor, in which the total pressure ($P_T$) occurring at the front end (2) of the sensor is detected via an axial Pitot tube running in the sensor, which represents the sum of the static pressure ($P_S$) of the medium and its speed-dependent dynamic pressure ($Q_C$) and in which by means of at least one radial channel (5) separated from the Pitot tube (3) a second measured value ($P_L$) or a multiplicity of second measured values is detected, which enables the total pressure ($P_T$) to be split up, in which the second measured value ($P_L$) is detected at the back of a sensor head (1a) allocated to the front end of the sensor, the largest diameter of which is larger than the external diameter of the sensor shaft (1b) formed by the remaining sensor body, the second measured value ($P_L$) representing the difference between the static pressure ($P_S$) and a speed-dependent dynamic pressure content ($C_L \times Q_C$) of the air or gas.

2. Method according to Claim 1, characterized in that at least two further measured pressure values ($P_1$; $P_3$) are detected at points spaced in the peripheral direction on the front side of the sensor head (la) to measure at least one measurement angle of the flow stream.

3. Sensor for implementing the method according to Claim 1, with a streamlined sensor head (1a) arranged at the front end (2) of the sensor body (1) and a sensor shaft (1b) adjoining it in step form downstream of the flow stream and having a smaller diameter than that of the sensor head (1a), and with a Pitot tube (3) ending in the sensor head (la) and a suction channel opening on the back of the sensor head (1b), which channel comprises at least one discrete radial channel (5) led in the sensor head (1a) and opens to the outside by means of an adjoining axial channel (10) on the back (8) of the sensor head (1a).

4. Sensor according to Claim 3, characterized in that several radial and/or axial channels (5; 10) open on the back (8) of the sensor head (1a) at uniform distances from each other.

5. Sensor for implementing the method according to Claim 1, with a streamlined sensor head (1a) arranged at the front end (2) of the sensor body (1) and a sensor shaft (1b) adjoining it in step form downstream of the flow stream and having a smaller diameter than that of the sensor head (1a), and with a Pitot tube (3) ending in the sensor head (1a) and a suction channel opening on the back of the sensor head (1a), which channel is formed by an annular slot (5a) cut in immediately behind the sensor head (1a) on the periphery of the sensor shaft (1b), into which slot at least one measurement channel (7) opens.

6. Sensor according to one of Claims 3 to 5, characterized in that at least two, particularly four, measurement holes ($P_1$, $P_3$; $P_2$, $P_4$) spaced from each other in the peripheral direction and running in the wall (4a) of the sensor head (1a) open on the flow side of the sensor head (1a).

## Revendications

1. Procédé de mesure de la vitesse relative d'un courant d'air ou de gaz affluent à une vitesse transsonique ou supersonique dans un capteur aérodynamique, dans laquel on détecte la pression ($P_T$) totale apparaissant à l'extrémité avant (2) du capteur par l'intermédiaire d'un tube de Venturi axial s'étendant dans le capteur, qui représente la somme de la pression ($P_T$) statique du fluide et de sa pression ($Q_C$) dynamique dépendant de la vitesse et dans lequel on détecte au moyen d'au moins un canal (5) distinct du tube (3) de Venturi une seconde valeur ($P_L$) de mesure ou une pluralité de secondes valeurs de mesure, qui permettent de connaître la répartition de la pression ($P_T$) totale, dans lequel on détecte la seconde valeur ($P_L$) de mesure sur la face arrière d'une tête de capteur, qui est associée à l'extrémité avant du capteur, et dont le plus grand diamètre est plus grand que le diamètre extérieur du tronc (1b) de capteur formé par le corps de sonde restant, la seconde valeur ($P_L$) de mesure représentant la différence de la pression ($P_S$) statique et d'une composante ($C_L \times Q_C$) de la pression dynamique, dépendant de la vitesse, de l'air ou du gaz.

2. Procédé suivant la revendication 1, caractérisé en ce que l'on détecte au moins deux autres valeurs ($P_1$ ; $P_3$) de mesure de pression à des endroits éloignés dans la direction circonférentielle sur les côtés avant de la tête (1a) de capteur pour mesurer au moins un angle de mesure du courant.

3. Capteur pour mettre en oeuvre le procédé suivant la revendication 1, comportant une tête (1a) de capteur aérodynamique disposée à l'extrémité avant (2) du corps (1) de capteur et un tronc (1b) de capteur, qui s'y raccorde en gradins en aval du flux et qui a un diamètre plus petit que celui de la tête (1a) de capteur, un tube (3) de Venturi se terminant dans la tête (la) de capteur ainsi qu'un canal d'aspiration, qui débouche sur le côté arrière de la tête (1b) de capteur, et est consititué d'au moins un canal (5) radial discret passant dans la tête (1a) de capteur et débouche vers l'extérieur au moyen d'un canal (10) axial s'y raccordant, sur le côté (8) arrière de la tête (1a) de capteur.

4. Capteur suivant la revendication 3, caractérisé en ce que plusieurs canaux (5 ; 10) radiaux et axiaux débouchent à des intervalles égaux les uns par rapport aux autres sur le côté (8) arrière de la tête (1a) de capteur.

5. Capteur pour mettre en oeuvre le procédé suivant la revendication 1, comportant une tête (1a) de capteur aérodynamique et disposé à l'extrémité avant (2) du corps (1) de capteur, un tronc (1b) de capteur s'y raccordant en gradins en aval du flux et ayant un diamètre plus petit que celui de la tête (1a) de capteur, un tube (3) de Venturi se terminant dans la tête (1a) de capteur ainsi qu'un canal d'aspiration, qui débouche sur le côté arrière de la tête (1a) de capteur et est formé par une rainure annulaire (5a) qui est taillée sur la périphérie du tronc (1b) de capteur directement derrière la tête (1a) de capteur et dans laquelle débouche au moins un canal (7) de mesure.

6. Capteur suivant l'une des revendications 3 à 5, caractérisé en ce que au moins deux et notamment 4 trous ($P_1$, $P_3$ ; $P_2$, $P_4$) de mesure s'étendant dans la paroi (4a) de la tête (1a) de capteur et à distance les uns des autres dans la direction circonférentielle débouche sur le côté en amont du flux de la tête (1a) de capteur.

## Fig.1

## Fig.2

## Fig.3

## Fig.4

Fig.5

Fig.6

Fig.7

## Fig.8

$$\triangle P_\alpha = P_1 - P_3$$

$$\triangle P_\beta = P_2 - P_4$$

## Fig.9